# EUROPEAN PATENT SPECIFICATION

(11) **EP 1 155 772 B1**
(45) Date of publication and mention of the grant of the patent: **03.11.2004**
(21) Application number: 01500121.7
(22) Date of filing: 16.05.2001
(51) Int. Cl.: B27C 5/04, B23Q 3/00

(54) **Protecting device for wood lowering machines**
Schutzvorrichtung für Holzbearbeitungsmaschine
Dispositif de protection pour une machine de travail du bois

(30) Priority: 19.05.2000 ES 200001405 U
(43) Date of publication of application: 21.11.2001
(73) Proprietor: Import-Export Bimaq SL, 08203 Sabadell (Barcelona) (ES)
(72) Inventor: Paris Florensa, Marcial, 08203 Sabadell (Barcelona) (ES); Paris Ortega, David, 08203 Sabadell (Barcelona) (ES)
(74) Representative: Manresa Val, Manuel

(56) References cited:
- EP-A- 0 586 171
- FR-A- 636 740
- US-A- 5 016 693

## Description

The present invention is a protecting device for wood lowering machines with two vertical walls lined up longitudinally, with a space for cutting element, a plurality of groove guides in the mentioned walls, occupied by the respective slide rods, which ones are liable to close the mentioned space and maintain only opened the useful working area, means for avoiding the incorrect introduction of the piece of wood, means for avoiding the moving back of the piece of wood, and means for fixing the same device to the planer machine's bed as per the preamble of claim 1. An example of such a device is disclosed by US 5016693-A.

### BACKGROUND OF THE INVENTION

It is known in the state of art several kinds of protecting devices for said wood lowering machines.

In this way, European Patent No. 215040 of Mr. Georg T. Agnier characterises in that the safety rods are mounted in a first safety support, in such a way that it is not possible to release them and can be inserted fully into the grooves of said safety support; and because the safety rods can be taken out from the safety support grooves for inserting them into the grooves of the second support.

The applicant is the owner of the French Certificat d'utilité No. 9705051 characterised because it has means for avoiding the incorrect introduction of the piece of wood, means for avoiding the moving back of the referred piece of wood and means for fixing the same device to the planner machine's bed.

Likewise it is known that the firm Hermetic, S.a.S. is marketing a device which it includes two screws on the top of the vertical walls, in such a way that if the first rod is pressed the rest are pressed too. This device has the inconvenience that if the rods are slid to the external part, at least one of the fixation screws does not press the rod, for this reason said rod is free and it is not safe. By the other hand the repetitive use of the screw makes that the first of the rods after the lapse of a short period of time is deteriorated and it is very difficult to make it slide along.

### BRIEF DESCRIPTION OF THE PATENT APPLICATION

This device includes a serie of advances, above all in reference to the comfort, economy and simplicity which they make it highly competitive in the market.

In fact they are known the great problems caused to the cabinet-maker and carpenters, because sometimes the same wood pulls along the tool determined parts of the human body, causing great injuries in said parts, as for example lost of phalanxes, deep cuts, etc.,.

There are several different solutions which avoid said injuries, but the same are machines non useful, for this reason, the professional has to be making a bad use of the same and the mentioned injuries are still produced.

The inventors have manufactured the protecting device for wood lowering machines which it comprises, as the majority of them two vertical walls lined up longitudinally with a space for the cutting element, occupied by the respective slide rods, which they can move from one side to the other of the mentioned walls, being said rods liable to close the mentioned space and maintain only opened the useful working area.

There are included means for avoiding the incorrect introduction of the piece of wood, it means, to avoid imprecise cuts, means for avoiding the moving back of the piece of wood, and means for fixing the same device to the planner machine's bed.

The present device is characterised because it includes a first element formed by a slide flatbar on the top of at least one of the vertical walls, an element in between, between the slide flatbar and the first of the slide rods, and fixation elements, often one or two screws, which they are liable to cross the referred slide flatbar and then press the mentioned element in between, which it presses the mentioned first slide rod, this rod at the same time to the second slide rod, and so successively, immobilizing all the referred slide rods.

Likewise the pressure which it causes the element in between over the first slide rod, is transformed in a pressure which it focuses on the most external area and in each one of the mentioned slide rods, fixing them and leaving them completely immobilized.

For this reason, from one side if the first slide rod slides practically out of the mentioned wall, although it is fixed by only one screw, the slide flatbar will slide too in such a way that it can be fixed by at least one of the screws; by the other side the fact to place an element in between, between the slide flatbar and the first slide bar, permits that the guiding elements of said slide rods can not be damaged, by the action of the screw, and that said damage is supported by said element in between, which it is very resistant, very cheap and very easy to change.

### BRIEF DESCRIPTION OF THE DRAWINGS

In order to facilitate the explanation two sheets of drawings are attached to the present description, where there is represented a practical case, which it is showed as an example, non limitative to the scope of the present invention.

In said two sheets of drawings:
- Figure 1 shows a side sight of the invention, with a cut which it shows the inner part of the vertical wall.
- Figure 2 shows a cut in section by the line "r" of the Figure 1 and a second cut which it permits to see the top of the wall and the fixation screw.

### PREFERRED EMBODIMENT OF THE PATENT APPLICATION

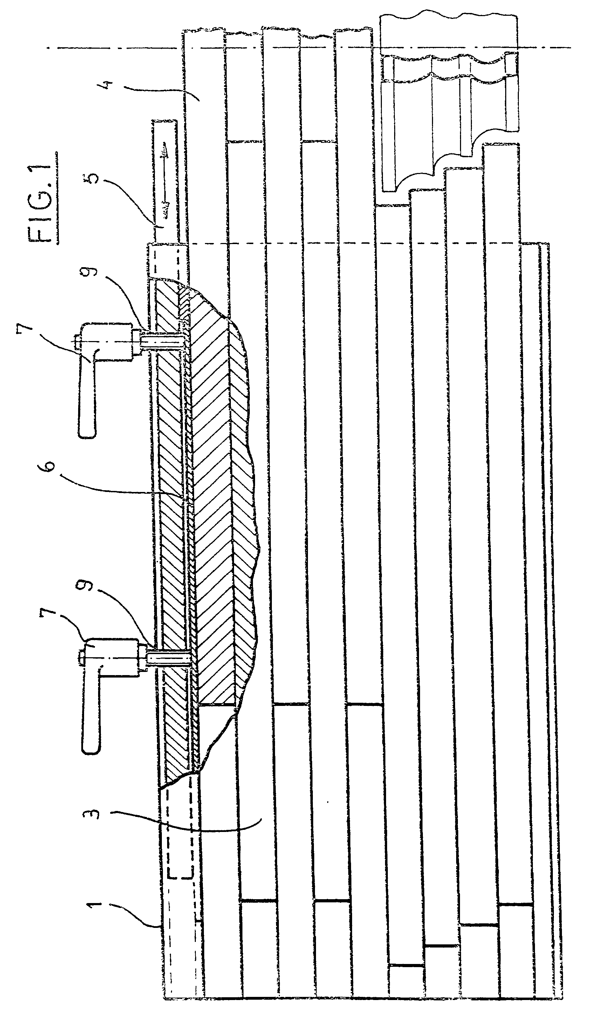

Figure 1 comprises a vertical wall (1), a first slide rod (4), a second and successives slide rods (3), a slide flatbar (5), a element in between (6) and fixation elements (7).

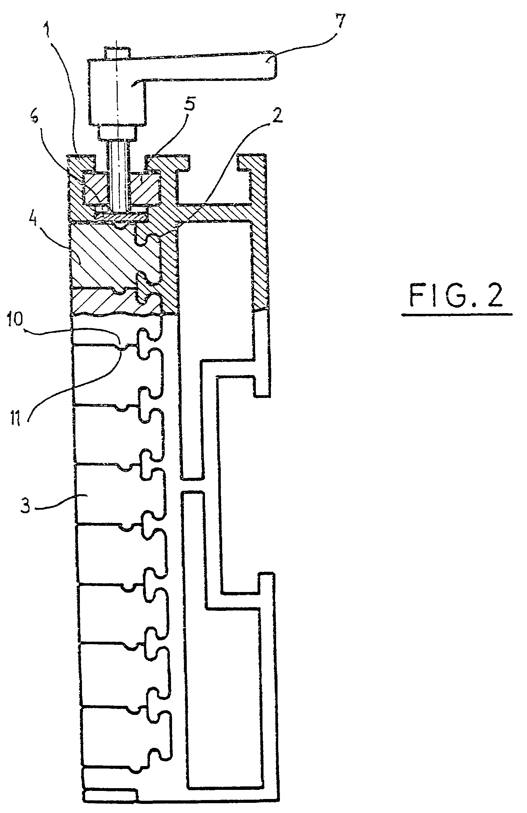

In Figure 2 it is illustrated the above mentioned vertical wall (1), the first slide rod (4), the second and successive slide rods (3), the slide flatbar (5), the element in between (6) and the fixation elements (7), and moreover the groove guides (2).

So, the referred slide rods (3), which they are in the mentioned vertical wall (1), in their initial position are totally or almost totally introduced into the mentioned vertical wall, the fixation elements (7), which they cross the slide flatbar (5) by some openings (9), are pressing the element in between (6), which at the same time presses down the first slide rod (4), that through a tongue (10) is introduced in the groove (11), and in that way successively in each one of the slide rods (3), immobilizing all of them.

If it is necessary the use of the present device, in order to protect the user to the planner machine's bed, it is unscrewed the fixation element (7), in such a way that the slide flatbar (5) is free and can run freely into the groove guide (2).

The different slide rods (3) are slid until they find the slide rods of the other vertical wall (non illustrated in the drawings) or until the wood lowering machine (non illustrated in the drawings).

Once the desired position is obtained, the fixation elements (7) are screwed again through the slide flatbar (5) until it founds the element in between (6), which it is pressed, and at the same it (the element in between) presses down the first slide rod (4), which through the tongue (10) is introduced into the groove (11) and in that way successively in each one of the slide rods (3), immobilizing all of them.

The great advantage of this system is that if the slide flatbar (5) is positioned practically at the end of the vertical wall (1), the fixation element (7) can be used too and at the same time immobilize all the slide rods. It means, that with only one fixation element and although the slide flatbar (5) is practically at the end of the vertical wall, practically out of the same, the present device works, which it confers a great possibilities of functional and safety qualities.

Likewise it is necessary to remark that none of the slide rods are damaged by the action of the fixation element.

The present invention describes a protecting device for wood lowering machines. The examples which they are mentioned here are not limitations of the present invention, for this reason it will be able to have different applications and/or adjustments, all of them included in the scope of the following claims.

## Claims

1. Protecting device for wood lowering machines which it comprises: two vertical walls (1) lined up longitudinally with a space for a cutting element, a plurality of groove guides (2) in the mentioned walls, occupied by the respective slide rods (3), which ones are liable to close the mentioned space and maintain only opened the useful working area, means for avoiding the incorrect introduction of a piece of wood, means for avoiding the moving back of a piece of wood, and means for fixing the same device to a planer machine's bed **characterised** because it includes:
- a first element formed by a slide flatbar (5) on the superior part of the vertical wall(1),
- an element in between (6), between the mentioned slide flatbar (5) and the first of the slide rods (4), and
- fixation elements (7), which are liable to cross the mentioned slide flatbar (5) and then press the mentioned element in between (6), which at the same time this last one presses the referred first of the slide rods (4), this rod at the same time to the second slide rod (3) and in that way successively, immobilizing all of said slide rods.

2. Device in accordance to claim 1 **characterised** because the pressure which it causes the element in between (6) to the first slide rod (4), is transformed in a pressure which it is focused on the most external area of all and each one of the mentioned slide rods.

## Patentansprüche

1. Schutzvorrichtung für Holzabsenkmaschinen, die folgendes umfasst: zwei längs angeordnete senkrechte Wände (1) mit einem Raum für ein Schneidelement, mehreren Rillenführungen (2) in den genannten Wänden, die mit entsprechenden Schubstangen (3) belegt sind, die in der Lage sind, den genannten Raum zu verschließen und nur die Nutzarbeitsfläche offen zu halten, Mitteln zur Vermeidung eines fehlerhaften Einschiebens des Holzes, Mitteln zur Vermeidung der Rückwärtsbewegung des Holzes, sowie Mitteln zur Befestigung der Vorrichtung an einem flacheren Maschinenbett, **dadurch gekennzeichnet, dass** sie folgendes aufweist:
- ein erstes Element bestehend aus einer flachen Gleitstange (5) am oberen Teil der senkrechten Wand (1),
- ein dazwischen liegendes Element (6), und zwar zwischen der genannten flachen Gleitstange (5) und der ersten der Schubstangen (4), sowie
- Befestigungselemente (7), die in der Lage sind, sich über die flache Gleitstange (5) hinweg zu bewegen und dann gegen das genannte, dazwischenliegende Element (6) zu drücken, wobei das letztere gleichzeitig gegen die genannte erste der Schubstangen (4) drückt, diese Stange gleichzeitig gegen die zweite Schubstange (3) und nacheinander so weiter drückt, bis alle der genannten Schubstangen blockiert sind.

2. Vorrichtung nach Anspruch 1, **dadurch gekennzeichnet, dass** der Druck, mit dem das dazwischen liegende Element (6) auf die erste Schubstange (4) drückt, in einen Druck umgewandelt wird, der auf den äußersten Bereich aller und jedes einzelnen der genannten Schubstangen wirkt.

## Revendications

1. Système de protection destiné aux raboteuses à bois comportant: deux parois verticales (1) alignées longitudinalement, laissant un espace pour un élément de coupe, une série de guides à rainure (2) prévus dans les parois ci-dessus, occupés par les barrettes coulissantes respectives (3), qui offrent la possibilité de fermer l'espace mentionné et de ne maintenir ouverte que la zone utile, des systèmes permettant toute introduction incorrecte d'une pièce de bois, des dispositifs permettant d'éviter le recul d'une pièce de bois et des moyens pour fixer ce système à la table de la raboteuse, ce dispositif étant **caractérisé par le fait qu'**il comporte:
- un premier élément se composant d'une règle plate coulissante (5) placée à la partie supérieure de la paroi verticale (1)
- un élément intermédiaire (6) situé entre la règle coulissante (5) déjà mentionnée et la première barrette coulissante (4)
- des éléments de fixation (7) offrant la possibilité de croiser la règle coulissante (5) déjà mentionnée et de s'appuyer alors sur l'élément intermédiaire (6) déjà mentionné, pendant que celui-ci s'appuie en même temps sur la première barrette coulissante (4) déjà mentionnée, celle-ci s'appuyant en même temps sur la seconde barrette coulissante (3) et immobilisant par conséquent toutes les réglettes coulissantes déjà mentionnées.

2. Système conforme à la revendication 1 **caractérisé par le fait que** la pression qu'il exerce sur l'élément intermédiaire (6) est transférée à la première barrette coulissante (4), et devient une pression centrée à la partie la plus externe de toutes les barrettes coulissantes mentionnées ci-dessus.
